# EUROPEAN PATENT SPECIFICATION

(11) **EP 2 332 311 B1**
(45) Date of publication and mention of the grant of the patent: **24.08.2016**
(21) Application number: 09748157.6
(22) Date of filing: 06.10.2009
(51) Int. Cl.: H04L 29/06, H04L 12/58, H04M 3/436, H04M 7/00

(54) **PROTECTION AGAINST UNSOLICITED COMMUNICATION FOR IMS**
SCHUTZ VOR UNERWÜNSCHTEN BERICHTEN FÜR IMS
PROTECTION CONTRE DES MESSAGES NON-SOLICITÉS POUR IMS

(30) Priority: 06.10.2008 JP 2008260089
(43) Date of publication of application: 15.06.2011
(73) Proprietor: NEC Corporation, Minato-ku Tokyo 108-8001 (JP)
(72) Inventor: PRASAD, Anand Raghawa, Tokyo 108-8001 (JP); KUNZ, Andreas, 69115 Heidelberg (DE); TAMURA, Toshiyuki, Tokyo 108-8001 (JP); SCHMID, Stefan, 69115 Heidelberg (DE); EWALD, Thilo, 69115 Heidelberg (DE)
(74) Representative: Vossius & Partner Patentanwälte Rechtsanwälte mbB
(86) International application number: PCT/JP2009/067690
(87) International publication number: WO 2010/041757

(56) References cited:
- WO-A1-2008/091986
- GB-A- 2 404 052

## Description

### TECHNICAL FIELD

The present invention relates to protection against unsolicited communication for Internet protocol multimedia subsystem.

The present application claims priority based on Japanese Patent Application No. 2008-260089.

### BACKGROUND ART

Internet protocol multimedia subsystems (IMS) integrate networks such as public switched telephone networks (PSTN) and mobile communication networks so as to provide users (or subscribers) with various communication services, wherein the IMS serving as a pivotal role in the next generation network (NGN) is standardized by the third generation partnership project (3GPP).

Electronic mailing services have suffered from social problems such as Spam and unsolicited (or junk) mails, which are unwanted mails unilaterally sent to recipients by senders. Unsolicited communications occur due to various factors derived from the popularization of the Internet, such as significant decreases of communication costs and advanced capabilities of network access terminals (such as personal computers purchasable by common users) transmitting numerous electronic mails to unspecified persons or sites.

The above problem (already occurred in electronic mailing services) seems to occur in the IMS due to its popularization. The 3GPP specification has initiated the protection against unsolicited communication for IMS (simply referred to as "PUCI") to protect users from Spam over the IP telephony (SPIT).

The document GB2404052, 19th January 2005 (2005-01-19) discloses spam processing system and methods including shared information among plural spam filters.

### DISCLOSURE OF INVENTION

For the purpose of the protection against unsolicited communication for IMS (PUCI), it is necessary to take different settings used for testing into account. Since various pieces of information are stored in various databases in systems, it is necessary to correlate and organize settings in such a way that no unwanted behavior occurs on end users. For example, even though the operator (or the carrier handling telecommunication services) maintains a global blacklist of undesired subscribers, some users may prefer to receive calls from particular subscribers registered with the global blacklist and to register them on a whitelist suited to users' preferences. In this case, the operator should allow particular subscribers of the global blacklist to send calls to prescribed users without being accidentally rejected by way of PUCI applications/testing. Numerous parameters are involved in making a decision whether to perform the PUCI testing because numerous calls are likely sent by distrusted sites or subscribers which are regarded as undesired sources originating numerous unsolicited calls, which are already registered with the global blacklist by the operator, or which already exceed call-rate limits. For this reason, users need to implement various settings such as personal blacklists, personal whitelists, personal call-rate limits, etc.

Until now, no mechanism has been available to organize various settings and to present the essential information allowing management functions to correlate settings.

The present invention seeks to solve the above problem in such a way that PUCI application servers are designed to manage and apply various settings such as personal/user settings (e.g. personal blacklist/whitelist) and global/network settings (e.g. global blacklist /whitelist). The present invention also aims at organizing personal/global settings in each PUCI application server and at updating personal/global settings.

The present invention implements key features and technical effects as follows:
(1) Correlation is established between personal policies and global policies (e.g. blacklist/whitelist) by way of policy manager (PM) functions in PUCI application servers or other entities accessible to PUCI-related policy databases.
(2) Rules/logics are implemented to update either global policies or personal policies, thus securing correlation between personal policies and global policies in databases. For example, personal whitelist policies may overwrite global blacklist policies. The operator may adjust the global blacklist policy when a certain source repeatedly appears in personal blacklists held by numerous users. Alternatively, when a certain source is registered with the global blacklist but is also registered with personal whitelists held by numerous users, the operator may exclude such a source from the global blacklist.
(3) Policies are modified when end users change their preferences by way of the user equipment (UE) or the user-preference database hosted by the operator (e.g. a part of a home subscriber server (HSS). For example, Ut interface is extended to allow a policy manager to update personal policies by the user equipment. Sh interface is extended to allow a policy manager to update personal policies by a network-hosted user-preference database.
(4) A new measure is implemented on the policy manager updating global policies. For example, Sh interface is extended to allow a policy manager to update global policies stored in a home subscriber server (HSS). A new interface is introduced to allow a policy manager to update a global policy database, which is stored in some location.
(5) A PUCI trusted/distrusted concept is introduced to organize peer-to-peer networks. For example, a PUCI application server or a PUCI-policy-associated database stores a trust level of another peering network. The trust level is automatically configured and/or configured by the operator based on legal inter-operator agreements. Herein, the operator configures a basic trust/category level when the operator recognizes that a peering network performs PUCI checking as well, wherein a certain level of adjustment is performed automatically/dynamically by the policy manager.
(6) Operators configure different thresholds each defining a certain level of PUCI processing. Herein, a session with a completely trusted network does not necessarily trigger any PUCI processing; a session with a halfway-trusted network may trigger basic PUCI processing in which a PUCI score already indicated in session initiation protocol (SIP) signaling; and a session with a distrusted network should be thoroughly checked by PUCI testing. In this connection, the trust level of an origin country is used in conjunction with other metrics (e.g. PUCI testing results) which are already gathered and indicated as a part of SIP headers.
(7) The policy manager has an ability to adjust the trust level of another country/network based on personal/global PUCI policies. Herein, each country/network involved with numerous blacklisted users is set or adjusted to a low trust level, while each country/network involved with few blacklisted users is set or adjusted to a high trust level.

### BRIEF DESCRIPTION OF THE DRAWINGS

Fig. 1 is an illustration showing the relationship between global PUCI settings and personal PUCI settings in connection to a PUCI application server.
Fig. 2 is a block diagram showing the constitution of a PUCI system including a user equipment (UE), a proxy call session control function (P-CSCF), a serving call session control function (S-CSCF), and a home subscriber server (HSS) in connection to the PUCI application server.
Fig. 3 is an illustration showing the relationship between user policies and operator policies which are correlated with each other.
Fig. 4 is a flowchart used for explaining rules/logics for processing calls.

### BEST MODE FOR CARRYING OUT THE INVENTION

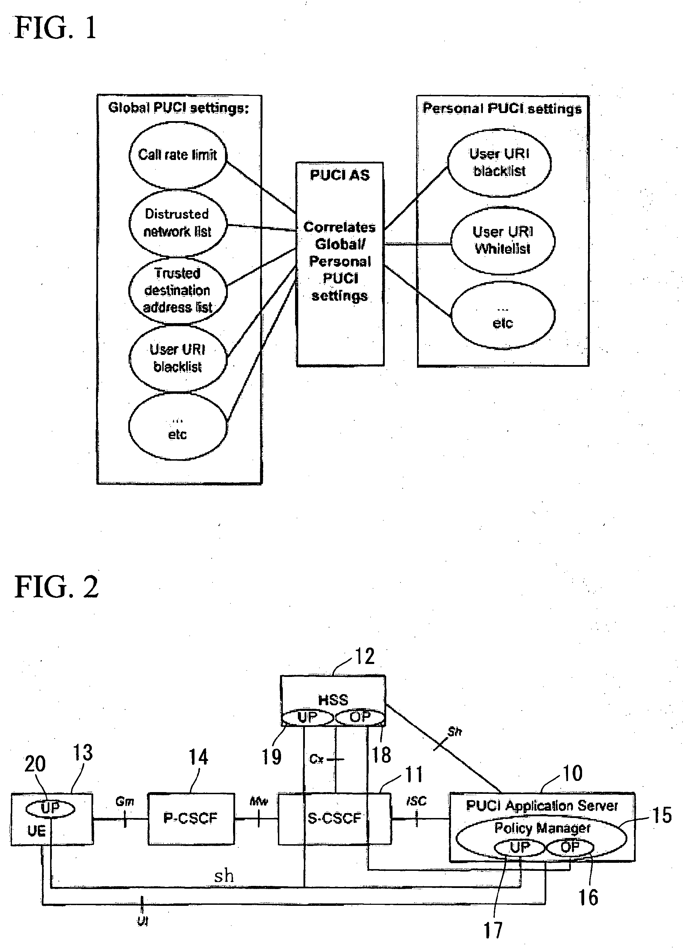

The present invention refers to a PUCI application server (PUCI AS) capable of managing various settings derived from various sources, i.e. user preferences (UP) and operator policies (OP). The operator holds operator policies which are updated in various databases. The correlation between various settings (e.g. UP and OP) has an impact on global OP databases. Fig. 1 shows the relationship between global PUCI settings (corresponding to OP) and personal PUCI settings (corresponding to UP) in connection to the PUCI application server.

Specifically, global PUCI settings include various constituent elements such as call rate limits, distrusted network lists, trusted destination address lists, and user URI (Universal Resource Identifier) blacklists, while personal PUCI settings include user URI blacklists and user URI whitelists. The PUCI AS manages the correlation between global PUCI settings and personal PUCI settings.

Fig. 2 shows a PUCI system including a PUCI application server 10, a serving call session control function (S-CSCF) 11, a home subscriber server (HSS) 12, a user equipment (UE) 13, and a proxy call session control function (P-CSCF) 14. The PUCI application server 10 includes a policy manager 15 which further includes an OP 16 and a UP 17; the HSS 12 includes an OP 18 and a UP 19; and the UE includes a UP 20. Herein, reference symbols Gm, Mw, Cx, Sh, and Ut denote interfaces based on respective standards, and ISC denotes an IMS service control.

The PUCI application server 10 gathers various pieces of information for the OP 16 and the UP 17 via various interfaces so that the policy manager 15 correlates the OP 16 and the UP 17. Each subscriber is capable of directly modifying a personal blacklist and a personal whitelist, which are stored in either the user equipment 13 or a UP database of a network. The user equipment 13 or the UP database updates settings for the PUCI application server 10 via the Ut interface and/or the Sh interface, thus modifying settings at the designated timing. This requires the IP connectivity of the user equipment 13 to the IMS without originating or terminating calls. The policy manager 15 of the PUCI application server 10 updates the OP 16 based on the correlation, which is computed by the following procedures. The PUCI application server 10 also updates the OP 18 and the UP 19 in the HSS 12 via the Sh interface.

The P-CSCF 14 forwards a SIP request to the S-CSCF 11, which in turn applies the initial filter criteria (iFC) to forward a call request to the PUCI application server 10. When the subscriber is registered with the global blacklist but is also registered with the personal whitelist, the PUCI application server 10 checks setting interactions to further process the call request. Each time one of entries in the OP 16 or the UP 17 changes, the policy manager 15 computes new values or entries for databases based on prescribed rules described in Table 1.

**Table 1**

| Rule | Operation on Policy Sets | Comments |
|---|---|---|
| 1 | Personal whitelist policies overwrite global blacklist policies. | |
| 2 | Personal whitelist policies remove global blacklist policies. | When the policy manager detects more than one configurable threshold of personal whitelist policies, it removes a global blacklist policy for a given source. |
| 3 | Personal blacklist policies overwrite global whitelist policies. | |
| 4 | Personal blacklist policies add global blacklist policies. | When the policy manager detects more than one configurable threshold of personal blacklist policies for a given source, it adds a user to a global blacklist. |
| 5 | Personal trusted country/network policies overwrite global trusted country/network policies. | |
| 6 | Personal trusted country/network policies add global trusted country/network policies. | When the policy manager detects more than one configurable threshold of personal blacklist policies for a given originating country/network, it adjusts a trust level in a global policy database. |

The rating whether each network is regarded as a trusted network or a distrusted network is produced based on legal inter-operator agreements (which are similar to roaming agreements) and is technically adjusted when each network is regarded as a source originating an unsolicited communication for the operator network. In this case, the policy manager 15 needs to evaluate call rate settings, blacklists and whitelists of individual subscribers in conformity with global settings applied to all subscribers administrated by the operator.

In a user's point of view, basic settings refer to various factors (which do not form a restriction) such as whitelists and blacklists, trusted origin countries/operators, and general personalization allowing users to parameterize/configure how to operate the PUCI, e.g. a definition of a personalized puzzle for each caller, in particular for each specious call, the time and date applying testing, and a decision whether to forward each suspicious call to a mail box.

In this connection, UP settings have a higher priority in comparison to OP settings, since each user prefers to receive calls from a certain unsolicited subscriber registered with the global blacklist. In addition, UP settings have a sort of influence on OP settings, since numerous people may each register a certain subscriber with their UP blacklists and then the operator refers to a certain threshold so as to make a decision for registering the subscriber with the global blacklist. Furthermore, when numerous subscribers register a certain subscriber already registered with the global blacklist with their UP whitelists, they are capable of removing the threshold from their blacklists.

The overall result (e.g. the number of users registered on each blacklist) is used to dynamically influence the trust level of a peering network in compliance with legal inter-working agreements. The trust level influences the type of PUCI testing to be carried out such by the operator (who trusts its peering operator), thus skipping operator policy testing and to just check whether the terminating subscriber has particular settings in user policies.

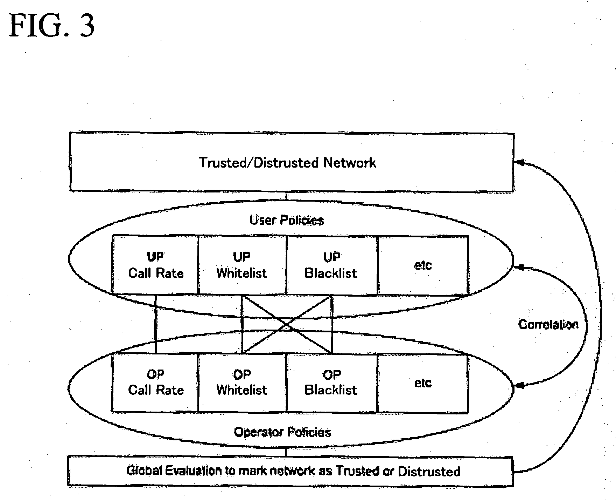

Fig. 3 shows the relationship between personal policies and global policies (or user policies and operator policies), which are correlated to each other so as to determine how personal policies are used to adjust/refine global policies and how personal/global policies are used to refine the trust level of a peering network.

The user policies include UP call rates, UP white lists, UP blacklists, etc., while the operator policies include OP call rates, OP white lists, OP blacklists, etc.

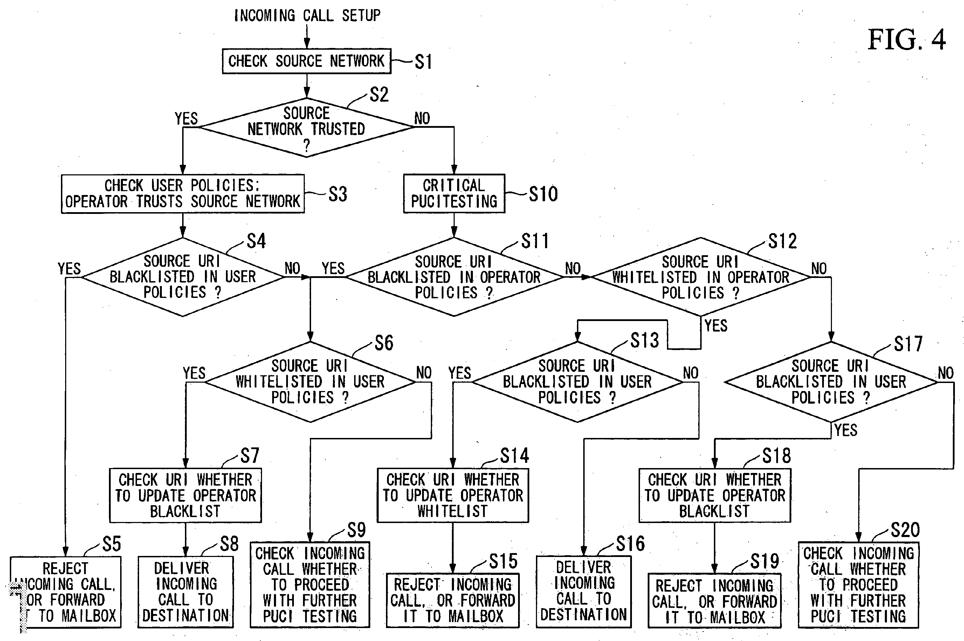

Fig. 4 is a flowchart used for explaining rules/logics for processing calls by way of steps S1 to S20.

### (Step S1)

Upon reception of an incoming call setup, the policy manager 15 checks a source network.

### (Step S2)

The policy manager 15 makes a decision as to whether or not the source network is trusted on the basis of the trust level stored in the policy manager 15 or the HSS 12.

### (Step S3)

When the decision result of step S2 is "YES" indicating that the source network is trusted, the policy manager 15 checks user policies, that is, the policy manager 15 checks whether the source network is registered with the UP whitelist/blacklist stored in the UP 17. The operator trusts the source network upon determination that the UP whitelist registers the source network and/or the UP blacklist does not register the source network.

### (Step S4)

The policy manager 15 makes a decision whether or not the UP blacklist of the UP 17 registers the URI of the source network originating the incoming call setup. This is because, even when the operator trusts the source network in step S3, it is necessary for the user to make a decision whether to accept or reject the incoming call.

### (Step S5)

When the decision result of step S4 is "YES" indicating that the URI of the source network is blacklisted in the user policies, the policy manager 15 rejects the incoming call or forwards it to a mailbox (not shown) used for notifying the user of the reception of the incoming call.

### (Step S6)

When the decision result of step S4 is "NO" indicating that the URI of the source network is not blacklisted in the user policies, the policy manager 15 makes a decision as to whether or not the UP whitelist of the UP 17 registers the URI of the source network originating the incoming call setup.

### (Step S7)

When the decision result of step S6 is "YES" indicating that the URI of the source network is white-listed in the user policies, the policy manager 15 checks the source network so as to determine whether to update the OP blacklist, wherein the URI of the source network is deleted from the OP blacklist. Herein, it is unnecessary to update the OP blacklist which does not register the URI of the source network. This makes it possible to correlate the UP 20 of the user equipment 13 to the UP 17 of the policy manager 15, thus updating their UP blacklists/whitelists.

### (Step S8)

The PUCI application server 10 delivers the incoming call to the destination, i.e. the user equipment 13, since the incoming call is originated from the trusted source network and is not registered with the UP blacklist but is registered with the UP whitelist.

### (Step S9)

When the decision result of step S6 is "NO" indicating that the URI of the source network is not white-listed in the user policies, the policy manager 15 checks the incoming call whether to proceed with further PUCI testing (which differs from the critical PUCI testing in Step S10).

### (Step S10)

When the decision result of step S2 is "NO" indicating that the source network is not trusted, the policy manager 15 needs to perform the critical PUCI testing.

### (Step S11)

The policy manager 15 makes a decision as to whether or not the URI of the source network is registered with the OP blacklist of the OP 16.

When the decision result of step S11 is "YES" indicating that the URI of the source network is blacklisted in the operator policies, the policy manager 15 proceeds to step S6.

### (Step S12)

When the decision result of step S11 is "NO", the policy manager 15 makes a decision as to whether or not the OP whitelist registers the URI of the source network.

### (Step S13)

When the decision result of step S12 is "YES" indicating that the URI of the source network is white-listed in the operator policies, the policy manager 15 makes a decision as to whether or not the UP blacklist registers the URI of the source network.

### (Step S14)

When the decision result of step S13 is "YES" indicating that the URI of the source network is blacklisted in the user policies, the policy manager 15 checks the URI whether to update the OP whitelist by deleting the URI from the OP whitelist.

### (Step S15)

The policy manager 15 rejects the incoming call or delivers it to the mailbox.

### (Step S16)

When the decision result of step S13 is "NO" indicating that the URI of the source network is not blacklisted in the user policies, the policy manager 15 delivers the incoming call to the destination, i.e. the user equipment 13.

### (Step S17)

When the decision result of step S12 is "NO" indicating that the URI of the source network is not white-listed in the operator policies, the policy manager 15 makes a decision as to whether or not the UP blacklist registers the URI of the source network.

### (Step S18)

When the decision result of step S17 is "YES" indicating that the URI of the source network is blacklisted in the user policies, the policy manager 15 checks the URI whether to update the update the OP blacklist.

### (Step S19)

The policy manager 15 rejects the incoming call or forwards it to the mailbox.

### (Step S20)

When the decision result of step S17 is "NO" indicating that the URI of the source network is not blacklisted in the user policies, the policy manager 15 checks the incoming call whether to proceed with further PUCI testing.

Lastly, the present invention is not necessarily limited to the present embodiment, which can be further modified within the scope of the invention as defined by the appended claims.

## Claims

1. A Protection against unsolicited Communication for Internet protocol multimedia subsystem, PUCI, system including a user equipment (UE) and a PUCI application server holding user policies in connection to a home subscriber server (HSS) holding operator policies, wherein a policy manager establishes a correlation between the user policies and the operator policies, thus determining whether to reject or forward an incoming call originated from a trusted/distrusted source network.

2. The PUCI system according to claim 1, wherein prescribed rules/logics are implemented to control the correlation between the user policies and the operator policies.

3. The PUCI system according to claim 2, wherein the user policies and/or operator policies are modified in association with the user equipment.

4. The PUCI system according to claim 1, wherein the policy manager rejects the incorning call which is originated from the trusted source network but is blacklisted in the user policies.

5. The PUCI system according to claim 1, wherein the policy manager forwards the incoming call originated from the trusted source network to the user equipment when the incoming call is white-listed in the user policies.

6. The PUCI system according to claim 5, wherein the incoming call originated from the trusted source network is subjected to further PUCI testing when the incoming call is not white-listed in the user policies.

7. The PUCI system according to claim 1, wherein the policy manager forwards the incoming call originated from the distrusted source network to the user equipment when the incoming call is blacklisted in the operator policies but is white-listed in the user policies.

8. The PUCI system according to claim 7, wherein the incoming call originated from the distrusted source network is subjected to further PUCI testing when the incoming call is blacklisted in the operator policies but is not white-listed in the user policies.

9. The PUCI system according to claim 1, wherein the policy manager rejects the incoming call originated from the distrusted source network when the incoming call is white-listed in the operator policies but is blacklisted in the user policies.

10. The PUCI system according to claim 9, wherein the policy manager forwards the incoming call originated from the distrusted source network to the user equipment when the incoming call is white-listed in the operator policies and is not blacklisted in the user policies.

11. The PUCI system according to claim 1, wherein the policy manager rejects the incoming call originated from the distrusted source network when the incoming call is not blacklisted/white-listed in the operator policies but is blacklisted in the user policies.

12. The PUCI system according to claim 11, wherein the incoming call originated from the distrusted source network is subjected to further PUCI testing when the incoming call is not blacklisted/white-listed in the operator policies and is not blacklisted in the user policies.

13. A Protection against Unsolicited Communication for Internet protocol multimedia subsystem, PUCI, apparatus including:
a plurality of global PUCI settings; and
a plurality of personal PUCI settings,
wherein the PUCI apparatus manages a correlation between the global PUCI settings and the personal PUCI settings so as to make a decision as to whether to accept or reject an incoming call.

14. A method of protection against an unsolicited communication for an IMS (Protection against Unsolicited Communication for Internet protocol multimedia subsystem, PUCI,) comprising:
implementing a plurality of global PUCI settings;
implementing a plurality of personal PUCI settings; and
managing a correlation between the global PUCI settings and the personal PUCI settings so as to make a decision whether to accept or reject an incoming call.

## Patentansprüche

1. PUCI-System (PUCI: Protection against Unsolicited Communication for Internet protocol multimedia subsystem, Schutz vor unerwünschter Kommunikation für ein Internet Protokoll Multimedia Subsystem), das aufweist: ein Benutzergerät (UE) und einen PUCI-Anwendungsserver, der Benutzerpolicen gespeichert hat, in Verbindung mit einem Teilnehmerheimatserver (Home subscriber server) (HSS), der Operatorpolicen gespeichert hat, wobei ein Policen-Manager eine Korrelation zwischen den Benutzerpolicen und den Operatorpolicen erzeugt, um zu entscheiden, ob ein ankommender Ruf, der aus einem vertrauenswürdigen/nicht vertrauenswürdigem Quellennetz stammt, zurückzuweisen oder weiterzuleiten ist.

2. PUCI-System nach Anspruch 1, wobei vorgeschriebene Regeln/Logiken angewendet werden, um die Korrelation zwischen den Benutzerpolicen und den Operatorpolicen zu steuern.

3. PUCI-System nach Anspruch 2, wobei die Benutzerpolicen und/oder Operatorpolicen in Verknüpfung mit dem Benutzergerät modifiziert werden.

4. PUCI-System nach Anspruch 1, wobei der Policen-Manager einen ankommenden Ruf, der aus dem vertrauenswürdigen Quellennetz stammt, aber in den Benutzerpolicen auf der schwarzen Liste steht, zurückweist.

5. PUCI-System nach Anspruch 1, wobei der Policen-Manager den ankommenden Ruf, der aus dem vertrauenswürdigen Quellennetz stammt, zu dem Benutzergerät weiterleitet, wenn der ankommende Ruf in den Benutzerpolicen auf der weißen Liste steht.

6. PUCI-System nach Anspruch 5, wobei der aus dem vertrauenswürdigen Quellennetz stammende ankommende Ruf einem weiteren PUCI-Prüfverfahren unterworfen wird, wenn der ankommende Ruf in den Benutzerpolicen nicht auf der weißen Liste steht.

7. PUCI-System nach Anspruch 1, wobei der Policen-Manager den aus dem nicht vertrauenswürdigen Quellennetz stammenden ankommenden Ruf zu dem Benutzergerät weiterleitet, wenn der ankommende Ruf in den Operatorpolicen auf der schwarzen Liste steht, aber in den Benutzerpolicen auf der weißen Liste steht.

8. PUCI-System nach Anspruch 7, wobei der aus dem nicht vertrauenswürdigen Quellennetz stammende ankommende Ruf einem weiteren PUCI-Prüfverfahren unterworfen wird, wenn der ankommende Ruf in den Operatorpolicen auf der schwarzen Liste steht, aber in den Benutzerpolicen nicht auf der weißen Liste steht.

9. PUCI-System nach Anspruch 1, wobei der Policen-Manager den aus dem nicht vertrauenswürdigen Quellennetz stammenden ankommenden Ruf zurückweist, wenn der ankommende Ruf in den Operatorpolicen auf der weißen Liste steht, aber in den Benutzerpolicen auf der schwarzen Liste steht.

10. PUCI-System nach Anspruch 9, wobei der Policen-Manager den aus dem nicht vertrauenswürdigen Quellennetz stammenden ankommenden Ruf zu dem Benutzergerät weiterleitet, wenn der ankommende Ruf in den Operatorpolicen auf der weißen Liste steht und in den Benutzerpolicen nicht auf der schwarzen Liste steht.

11. PUCI-System nach Anspruch 1, wobei der Policen-Manager den aus dem nicht vertrauenswürdigen Quellennetz stammenden ankommenden Ruf zurückweist, wenn der ankommende Ruf in den Operatorpolicen nicht auf der schwarzen Liste und nicht auf der weißen Liste steht, aber in den Benutzerpolicen auf der schwarzen Liste steht.

12. PUCI-System nach Anspruch 11, wobei der aus dem nicht vertrauenswürdigen Quellennetz stammende ankommende Ruf einem weiteren PUCI-Prüfverfahren unterworfen wird, wenn der ankommende Ruf in den Operatorpolicen nicht auf der schwarzen Liste und nicht auf der weißen Liste steht und in den Benutzerpolicen nicht auf der schwarzen Liste steht.

13. Vorrichtung zum Schutz vor unerwünschter Kommunikation für ein Internet Protokoll Multimedia Subsystem (PUCI-Vorrichtung), wobei die Vorrichtung aufweist:
mehrere globale PUCI-Einstellungen; und
mehrere persönliche PUCI-Einstellungen,
wobei die PUCI-Vorrichtung eine Korrelation zwischen den globalen PUCI-Einstellungen und den persönlichen PUCI-Einstellungen erzeugt, um eine Entscheidung zu treffen, ob ein ankommender Ruf anzunehmen oder zurückzuweisen ist.

14. Verfahren zum Schutz vor unerwünschter Kommunikation für ein Internet Protokoll Multimedia Subsystem (PUCI-Verfahren), wobei das Verfahren die folgenden Schritte aufweist:
Anwenden mehrerer globaler PUCI-Einstellungen;
Anwenden mehrerer persönlicher PUCI-Einstellungen; und
Erzeugen einer Korrelation zwischen den globalen PUCI-Einstellungen und den persönlichen PUCI-Einstellungen, um eine Entscheidung zu treffen, ob ein ankommender Ruf anzunehmen oder zurückzuweisen ist.

## Revendications

1. Système de protection contre une communication non sollicitée pour un sous-système multimédia de protocole Internet, PUCI, comportant un équipement utilisateur (EU) et un serveur d'application PUCI détenant des politiques d'utilisateur en lien avec un serveur d'abonné résidentiel (HSS) détenant des politiques d'opérateur, dans lequel un gestionnaire de politique établit une corrélation entre les politiques d'utilisateur et les politiques d'opérateur, déterminant ainsi s'il faut rejeter ou acheminer un appel entrant provenant d'un réseau source fiable/suspect.

2. Système PUCI selon la revendication 1, dans lequel des règles/logiques prescrites sont implémentées pour réguler la corrélation entre les politiques d'utilisateur et les politiques d'opérateur.

3. Système PUCI selon la revendication 2, dans lequel les politiques d'utilisateur et/ou les politiques d'opérateur sont modifiées en association avec l'équipement utilisateur.

4. Système PUCI selon la revendication 1, dans lequel le gestionnaire de politique rejette l'appel entrant qui provient du réseau source fiable mais est inscrit sur liste noire dans les politiques d'utilisateur.

5. Système PUCI selon la revendication 1, dans lequel le gestionnaire de politique achemine l'appel entrant provenant du réseau source fiable vers l'équipement utilisateur lorsque l'appel entrant est inscrit sur liste blanche dans les politiques d'utilisateur.

6. Système PUCI selon la revendication 5, dans lequel l'appel entrant provenant du réseau source fiable est soumis à un essai PUCI supplémentaire lorsque l'appel entrant n'est pas inscrit sur liste blanche dans les politiques d'utilisateur.

7. Système PUCI selon la revendication 1, dans lequel le gestionnaire de politique achemine l'appel entrant provenant du réseau source suspect vers l'équipement utilisateur lorsque l'appel entrant est inscrit sur liste noire dans les politiques d'opérateur mais est inscrit sur liste blanche dans les politiques d'utilisateur.

8. Système PUCI selon la revendication 7, dans lequel l'appel entrant provenant du réseau source suspect est soumis à un essai PUCI supplémentaire lorsque l'appel entrant est inscrit sur liste noire dans les politiques d'opérateur mais n'est pas inscrit sur liste blanche dans les politiques d'utilisateur.

9. Système PUCI selon la revendication 1, dans lequel le gestionnaire de politique rejette l'appel entrant provenant du réseau source suspect lorsque l'appel entrant est inscrit sur liste blanche dans les politiques d'opérateur mais est inscrit sur liste noire dans les politiques d'utilisateur.

10. Système PUCI selon la revendication 9, dans lequel le gestionnaire de politique achemine l'appel entrant provenant du réseau source suspect vers l'équipement utilisateur lorsque l'appel entrant est inscrit sur liste blanche dans les politiques d'opérateur et n'est pas inscrit sur liste noire dans les politiques d'utilisateur.

11. Système PUCI selon la revendication 1, dans lequel le gestionnaire de politique rejette l'appel entrant provenant du réseau source suspect lorsque l'appel entrant n'est pas inscrit sur liste noire/inscrit sur liste blanche dans les politiques d'opérateur mais est inscrit sur liste noire dans les politiques d'utilisateur.

12. Système PUCI selon la revendication 11, dans lequel l'appel entrant provenant du réseau source suspect est soumis à un essai PUCI supplémentaire lorsque l'appel entrant n'est pas inscrit sur liste noire/inscrit sur liste blanche dans les politiques d'opérateur et n'est pas inscrit sur liste noire dans les politiques d'utilisateur.

13. Appareil de protection contre une communication non sollicitée pour un sous-système multimédia de protocole Internet, PUCI, comportant :
une pluralité de paramètres PUCI globaux ; et
une pluralité de paramètres PUCI personnels,
dans lequel l'appareil PUCI gère une corrélation entre les paramètres PUCI globaux et les paramètres PUCI personnels de façon à décider d'accepter ou de rejeter un appel entrant.

14. Procédé de protection contre une communication non sollicitée pour un IMS (protection contre une communication non sollicitée pour un sous-système multimédia de protocole Internet, PUCI), comprenant :
l'implémentation d'une pluralité de paramètres PUCI globaux ;
l'implémentation d'une pluralité de paramètres PUCI personnels ; et
la gestion d'une corrélation entre les paramètres PUCI globaux et les paramètres personnels de façon à décider d'accepter ou de rejeter un appel entrant.
